Europäisches Patentamt

European Patent Office

Office européen des brevets

(11) Publication number: **0 095 339**
**A1**

(12) # EUROPEAN PATENT APPLICATION

(21) Application number: **83302889.7**

(22) Date of filing: **20.05.83**

(51) Int. Cl.³: **B 23 B 47/28**
**B 27 C 3/06**

(30) Priority: **21.05.82 GB 8214830**

(43) Date of publication of application:
**30.11.83 Bulletin 83/48**

(84) Designated Contracting States:
**AT BE CH DE FR GB IT LI LU NL SE**

(71) Applicant: **GKN Screws & Fasteners Limited**
**P.O.Box 60, Heath Street Smethwick**
**Warley, West Midlands. B66 2SA(GB)**

(72) Inventor: **Hardwick, George Edward**
**1 Tibberton Close**
**Halesmere Halesowen West Midlands(GB)**

(72) Inventor: **Partridge, Malcolm John**
**29, Woodside Close**
**Walsall WS5 34U West Midlands(GB)**

(72) Inventor: **Aucott, Peter Malcolm Stanley**
**20, Lydney Close Church Hill North**
**Redditch, BN8 9LL Worcestershire(GB)**

(74) Representative: **Thorpe, Brian et al,**
**Guest Keen & Nettlefolds plc. Group Patents and**
**Licensing Department Group Head Office P.O. Box 55**
**Smethwick, Warley West Midlands B66 2RZ(GB)**

(54) **Joinery jig and clamp.**

(57) A joinery jig is described for clamping two flat work-pieces (W1) and (W2) together in parallel relationship to permit the formation of screw or dowel holes in a surface of one work-piece (W1) and in an edge of the other work-piece (W2). The jig comprises a fixed central abutment (10) and further abutments (22) and (34) one on each side of the fixed abutment (10) and slidable relative thereto. The two slidable abutments (22) and (34) each have one or more respective holes (28) and (40) therein with mutually perpendicular axes permitting the formation of the screw or dowel holes in the work-piece surface or edge. The jig includes clamping means (18, 32) for securing each of the workpieces (W1) and (W2) independently in the jig by clamping each work-piece between a sliding abutment (22) or (34) and the fixed abutment (10).

EP 0 095 339 A1

Croydon Printing Company Ltd

BT/P82.013          JOINERY JIG AND CLAMP

This invention relates to a joinery jig for the releasable securing together of flat work-pieces to enable a fastening locator to be formed in a surface of one work-piece and an edge of the other work-piece whereby the fastening locators are subsequently alignable to enable an accurate corner joint to be made between the work-pieces. The term "fastening locator" as used throughout this specification and claims will be understood to refer to a hole, which may be a pilot hole for the reception of a joinery screw or which may be a hole for the reception of a dowel, or to an indent or mark which may serve as a location for any other fastening such as for example a nail or other drive fixing.

Various forms of dowelling jigs have been proposed which have comprised clamping assemblies for the releasable securing together of flat work-pieces either in mutually perpendicular relationship or in parallel relationship whilst the dowel pin holes are formed. One of the latter type of jigs is described and illustrated in GB-A- 2,071,537 which teaches the provision of a dowelling tool having a fixed end abutment with apertures therein enabling the forming of dowel holes in a surface of one work-piece and a movable abutment with apertures therein enabling the forming of dowel holes in an edge of another work-piece; the two work-pieces being clamped on either side of the movable abutment and against the fixed abutment by means of a foot screw-threadedly movable relative to the tool body. One disadvantage which is readily discernable with this arrangement is that the two work-pieces must both be aligned with one another by the user at the same time as they are being clamped since it is not possible to clamp one work-piece independantly of the other.

**0095339**

One of the objects of the present invention is to provide an improved form of joinery jig wherein each work-piece is securable therein independantly of the other.

In accordance with the invention there is provided a joinery jig for releasably securing first and second flat work-pieces together in parallel relationship to permit the formation of a fastening locator in a surface of said first work-piece and an edge of said second work-piece comprising a first abutment member having opposed faces each respectively engagable by a surface of each of the work-pieces; a second abutment member having a first face parallel to one of said faces of the first abutment member and a second face perpendicular to said first face, at least one hole being formed through said first face; a third abutment member having a first face parallel to the other of said faces of the first abutment member and a second face perpendicular to said first face, at least one hole being formed through said second face; and clamping means permitting relative movement between the abutment members whereby, in use, a first work-piece is clampable between said one face of the first abutment member and said first face of the second abutment member with an edge of said work-piece abutted against the said second face thereof, a second work-piece is clampable between said opposed face of the first abutment member and the said first face of the third abutment member with an edge of said second work-piece abutted against the said second face thereof permitting a member to be inserted through the respective said holes in the second and third abutment members for forming a fastening locator in a respective surface of said first work-piece and an edge of said second work-piece.

Preferably the first abutment member is fixed and said second and third abutment members are each movable relative to the first abutment member on opposite sides thereof.

The clamping means may comprise at least one support member upon which the abutment members are mounted and screw-threaded means may be associated with the support member for effecting clamping engagement of the work-pieces between the respective abutment members, the first abutment member conveniently being fixedly mounted on the support member and the second and third abutment members being slidably mounted thereon.

The said clamping means may comprise a pair of parallel support members extending from each side of the said first abutment member and being fixedly secured thereto, a pair of said support members passing through a respective said second and third abutment member affording sliding movement of each of said second and third abutment members thereon, and a rotatable screw-threaded member being mounted on a cooperating screw-threaded end of each support member for effecting clamping engagement of the work-pieces between the respective abutment members.

Instead of screw-threaded means associated with the or each support member there may be provided a spring-loaded quick release mechanism for effecting the clamping engagement aforesaid.

Also in accordance with the invention there is provided a method of forming alignable fastening locators respectively in a surface of a first flat work-piece and an edge of a second flat work-piece enabling a corner joint to be made between the two work-pieces comprising the steps of clamping the two work-pieces together in parallel relationship in a joinery jig of the type described in the preceding paragraphs and, whilst the work-pieces are so clamped together, inserting a member through the respective said holes in the second and third abutment members and forming a fastening locator in the said surface of the first work-piece and in the said edge of the second work-piece.

There is also provided in accordance with the invention the combination of a joinery jig as described in the preceding paragraphs together with a T-joint jig; the T-joint jig comprising an abutment member having a hole therethrough and a spigot extending from the member perpendicular to the axis of the hole whereby, in use, the spigot is insertable in a fastening locator in an edge of a flat work-piece and a member is insertable through the hole in the T-joint jig for forming a fastening locator in a surface of a further flat work-piece.

Furthermore in accordance with the invention there is provided a method of forming alignable fastening locators respectively in a surface of a first flat work-piece and an edge of a second flat work-piece enabling a T-joint to be made between the two work-pieces comprising the steps of clamping the said second work-piece alone in a joinery jig of the type described in the preceding paragraphs, inserting a member through the hole in the said third abutment member and forming a fastening locator in the said edge of the second work-piece, releasing the second work-piece from the jig, clamping the second work-piece in parallel relationship with the first work-piece, inserting the spigot of the T-joint jig into the fastening locator formed in the edge of the second work-piece, inserting a member through the hole of the T-joint jig and forming a fastening locator in the surface of the first work-piece.

Other features of the invention will become apparent from the following description given herein solely by way of example, with reference to the accompanying drawings wherein:-

Figure 1 is an exploded perspective view of a joinery jig constructed in accordance with the invention;

Figure 2 is a side cross-sectional view showing two work-pieces clamped in the jig; and,

Figure 3 is a side cross-sectional view of a T-joint jig for use in the formation of a T-joint between two work-pieces.

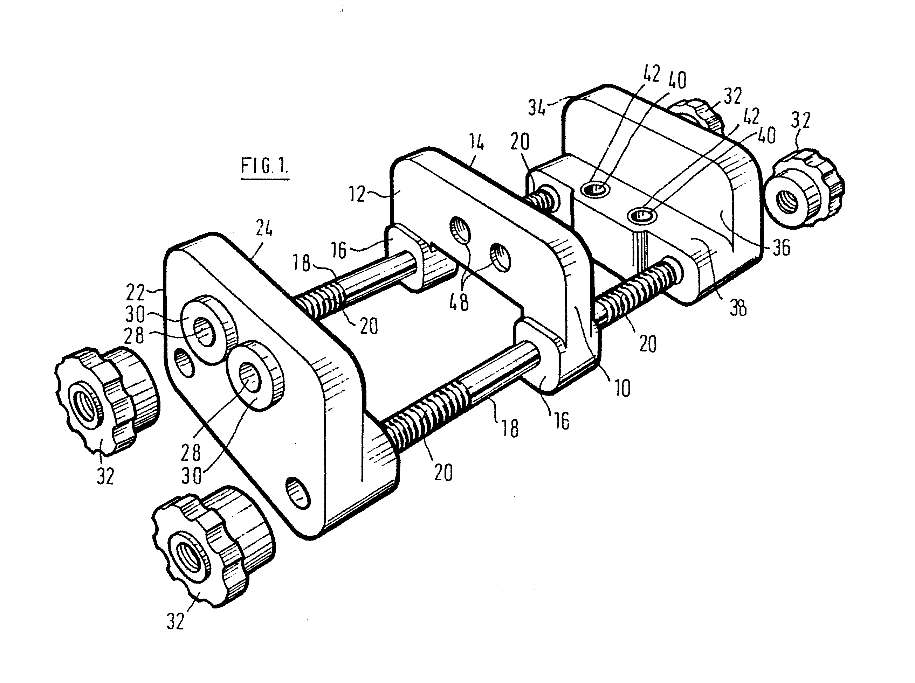

Referring to Figure 1 of the drawings there is shown a joinery jig constructed in accordance with the invention which is usable for the releasable securing together of flat work-pieces to enable a fastening locator to be formed in a surface of one work-piece and an edge of the other work-piece. Typically the jig may be used with chipboard work-pieces which usually come in standard thicknesses of 15 mm or 16 mm. As previously defined, the term "fastening locator" is understood to refer to a screw or dowel hole or to an indent or mark but in the following description the term is used to refer to a pilot hole for the reception of a joinery screw.

Essentially the jig comprises a first fixed abutment member 10 having opposed parallel faces 12 and 14 and an enlarged boss 16 at each lower corner thereof within each side of which is engaged a support member in the form of a rod 18 having a smooth surface adjacent the abutment member but terminating in a screw-threaded end portion 20.

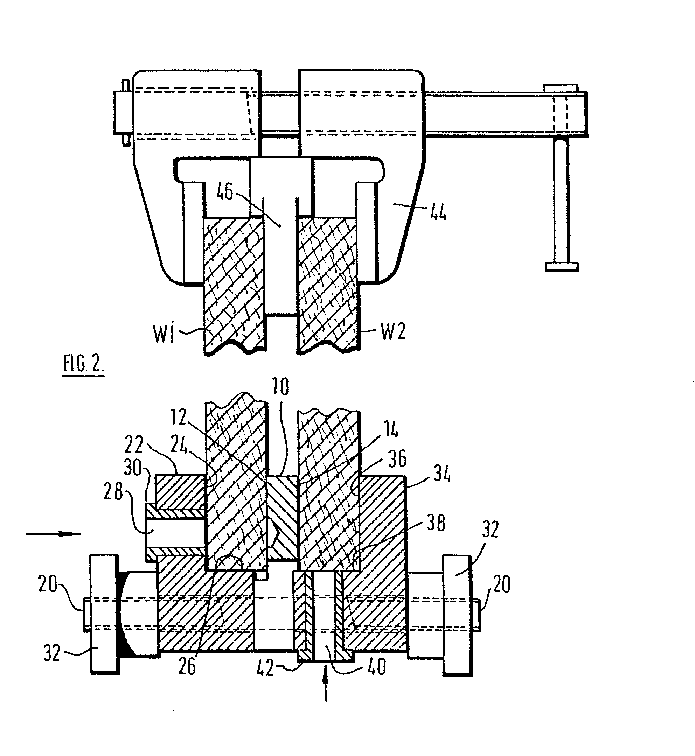

A second abutment member 22 has a first face 24 parallel to one face 12 of the first abutment member 10 and a second face 26 perpendicular to said first face 24. A pair of holes 28 extend through the first face 24 of this abutment member 22 each of which holes is lined with a wear resistant bushing 30. The internal diameter of each of the bushings 30 is the same but they are off-set slightly with respect to the top edge of the abutment member 22 to accommodate the formation of pilot holes in the two standard thicknesses of chipboard. This second abutment member 22 is slidably mounted on the two support members 18 extending from the fixed abutment member 10 and a screw-threaded knurled nut 32 is engagable with the end 20 of each support member 18 enabling a first work-piece W1, to be clamped between the said first and second abutment members as shown in Figure 2.

A third abutment member 34 is slidably mounted on the other two support members 18 on that side of the first abutment member 10 remote from the second abutment member 22. This third abutment member 34 is provided with a first face 36 parallel to the other face 14 of the abutment member 10 and a second face 38 perpendicular to said first face 36. A pair of holes 40 are formed through this second face 38 each of which holes is lined with a wear resistant bushing 42. The internal diameters of the bushings 42 are identical but they are off-set relative to one another again to accommodate the two standard different thicknesses of chipboard. The internal diameters of these two bushings 42 are less than the internal diameters of the bushings 30 in the second abutment member 22 for the formation of a pilot hole in the edge of a second work-piece as will be further described. Such a second work-piece W2 is shown clamped in position between the first and third abutment members in Figure 2 of the drawings.

In use, the first work-piece W1 is clamped between the first and second abutment members 10 and 22 with an edge thereof abutted against the second face 26 of the second abutment member 22. The second work-piece W2 is then similarly clamped between the first and third abutment members 10 and 34 and the sides of the two work-pieces are aligned by the user. Since the first work-piece W1 is clampable in position in the jig before the second work-piece is clamped it is easy for the user to align the sides of the two work-pieces.

As shown in Figure 2, when relatively large work-pieces are being used, it may be desirable to effect further clamping between the two work-pieces by means of a conventional G-clamp 44 and a spacer 46 of a thickness equal to the thickness of the first abutment member 10.

When the two work-pieces W1 and W2 are clamped as illustrated in Figure 2, it is possible to insert a drill bit through one of the bushings 30 in the second abutment member 22 as shown by the arrow, according to the thickness of the work-piece, and form a through pilot hole in the surface of the first work-piece W1. To enable the drill bit to pass cleanly through the first work-piece W1, depressions 48 are provided in the cooperating face 12 of the first abutment member 10. These depressions 48 also enable the provision of a clean edge around the rear face of the drilled hole in the workpiece. A drill bit of a somewhat smaller diameter is then passed through one of the bushings 42 in the third abutment member 34 as shown by the arrow to form a pilot hole in the edge of the second work-piece W2. Whilst the two work-pieces remain clamped together by the G-clamp 44, the jig may be released and moved along the edges of the two work-pieces W1 and W2 to repeat the operation at another one or more locations. The work-pieces may then be released from the jig and from the G-clamp and offered together to form a corner joint wherein the pilot holes will be perfectly aligned with one another for the reception of a joinery screw which will pass freely through the larger diameter hole formed in the surface of the first work-piece W1 but which will be screw-threadedly engagable within the smaller diameter pilot hole in the edge of the second work-piece W2.

It will be appreciated that dowel pins may be used instead of joinery screws but, in such a circumstance, it would be necessary for the holes in the surface of the first work-piece and in the edge of the second work-piece to be of the same diameter to which end the bushings in the respective second and third abutment members would have to be of equal internal diameter.

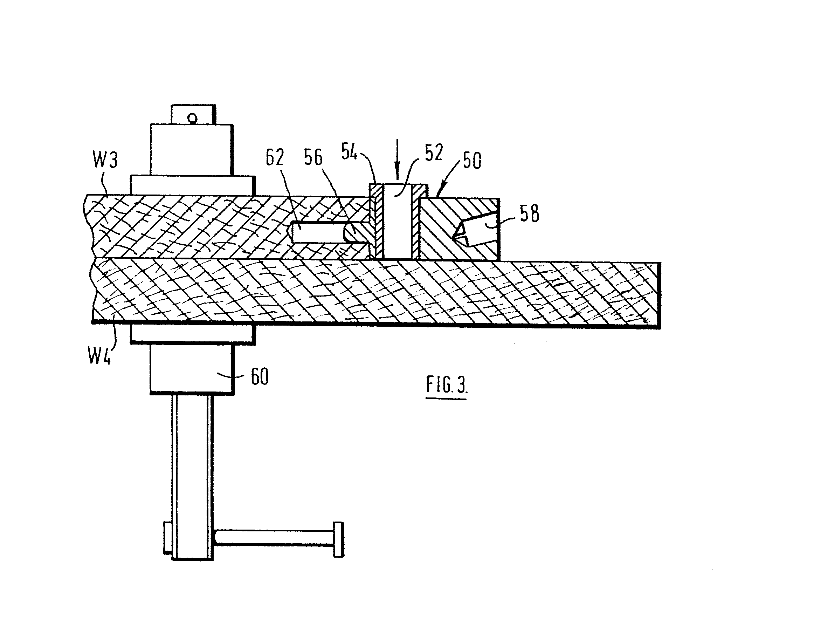

The joinery jig of the invention may also be used in combination with a T-joint jig 50 to enable a T-joint connection to be made between work-pieces W3 and W4 as shown in Figure 3. To form such a T-joint it is first of all necessary to clamp one work-piece W3 alone in the joinery jig between the first and third abutment members 10 and 34 to enable the formation of a pilot hole 62 in the edge of the work-piece W3 in a manner previously described with reference to the work-piece W2.

The T-joint jig 50 comprises an abutment member with a hole 52 therethrough lined with a wear resistant bushing 54 and having a spigot 56 extending therefrom perpendicular to the axis of the hole 52. Conveniently a recess 58 may be formed in the face of the abutment member opposite to the spigot 56 for a purpose which will be further described.

In Figure 3 of the drawings the two work-pieces W3 and W4 are shown clamped together by a conventional clamp 60 with the spigot 56 of the T-joint jig 50 engaged within a pilot hole 62 previously formed in the edge of the one work-piece W3. The T-joint jig 50 may then be held in position by a member, such as for example a screw driver blade, engaged within the recess 58 whilst a drill bit is inserted through the bushing 54 as shown by the arrow to form a further pilot hole in the surface of the other work-piece W4. These operations can then be repeated along the edge of the one work-piece W3 and the surface of the work-piece W4 and, after the work-pieces have been released from the clamp 60, they may be offered together to form a T-joint having perfectly aligned pilot holes for the reception of joinery screws or dowel pins.

It will be appreciated that a different size of T-joint jig will be selected according to the thickness of the workpiece W3. The distance between the centre line of the bushing 54 and the edge of the workpiece W3 will be selected so as to be equal to half the thickness of workpiece W3 thus enabling the subsequent T-joint between workpieces W3 and W4 to be made along a line determined by the initial positioning of the said edge of workpiece W3 relative to workpiece W4 when they are clamped together as shown in Figure 3.

It should also be appreciated that jigs according to the invention can be used, not only with chipboard of the two thicknesses referred to herein, but also with other wooden or plastics boards of standard or non-standard thicknesses. Thus, for example, the jig described with reference to Figures 1 and 2 may be provided with one, or more than two, holes 28 and 40 of the same or different diameters and different relative off-sets as may be required.

CLAIMS

1. A joinery jig for releasably securing first and second flat work-pieces together in parallel relationship to permit the formation of a fastening locator in a surface of said first work-piece and in an edge of said second work-piece characterised by the provision of a first abutment member(10) having opposed faces (12 and 14)each respectively engagable by a surface of each of the work-pieces; a second abutment member (22)having a first face (24) parallel to one of said faces (12) of the first abutment member (10) and a second face (26) perpendicular to said first face (24), at least one hole (28) being formed through said first face (24); a third abutment member (34) having a first face (36) parallel to the other of said faces (14) of the first abutment member (10) and a second face (38) perpendicular to said first face (36), at least one hole (40) being formed through said second face (38); and clamping means (18, 32) permitting relative movement between the abutment members whereby, in use, a first work-piece (W1) is clampable between said one face (12) of the first abutment member and said first face (24) of the second abutment member with an edge of said first work-piece abutted against the said second face thereof and a second work-piece (W2) is clampable between said opposed face (14) of the first abutment member and the said first face (36) of the third abutment member with an edge of said second work-piece abutted against the said second face thereof permitting a member to be inserted through the respective said holes (28 and 40) in the second and third abutment members for forming a fastening locator in a respective surface of said first work-piece and in an edge of said second work-piece.

2. A joinery jig as claimed in Claim 1 further characterised in that said first abutment member (10) is fixed and said second and third abutment members (22 and 34) are each movable relative to the first abutment member on opposite sides thereof.

3. A joinery jig as claimed in either one of Claims 1 or 2 further characterised in that said clamping means (18, 32) comprises at least one support member (18) upon which the abutment members (10, 22 and 34)are mounted and means (32) associated with the support member for effecting clamping engagement of the work-pieces between the respective abutment members.

4. A joinery jig as claimed in Claim 3 further characterised in that said first abutment member (10) is fixedly mounted on the support member (18) and the second and third abutment members (22 and 34) are slidably mounted thereon.

5. A joinery jig as claimed in either one of Claims 3 or 4 further characterised in that said means associated with the support member (18) comprises a rotatable screw-threaded member (32) mounted on a co-operating screw-threaded end (20) of the support member (18).

6. A joinery jig as claimed in either one of Claims 3 or 4 further characterised in that said means associated with the support member (18) comprises a spring-loaded quick release mechanism.

7. A joinery jig as claimed in Claim 4 further characterised in that said clamping means (18, 32) comprises a pair of parallel support members (18) extending from each side of the said first abutment member (10) and being fixedly secured thereto, a pair of said support members passing through a respective said second and third abutment member(22 and 34) affording sliding movement of each of said second and third abutment members thereon, and a rotatable screw - threaded member (32) being mounted on a cooperating screw-threaded end (20)of each support member for effecting clamping engagement of the work-pieces between the resepective abutment members.

3    0095339

8. In combination, a joinery jig as claimed in any one of Claims 1 to 7 and a T-joint jig(50); characterised in that said T-joint jig (50) comprises an abutment member having a hole (52) therethrough and a spigot (56) extending from the member perpendicular to the axis of the hole whereby, in use, the spigot (56) is insertable in a fastening locator (62) in an edge of a flat work-piece (W3) and a member is insertable through the hole (52) in the T-joint jig for forming a fastening locator in a surface of a further flat work-piece (W4).

9. A method of forming alignable fastening locators respectively in a surface of a first flat work-piece (W1) and an edge of a second flat work-piece (W2) enabling a corner joint to be made between the two work-pieces comprising the steps of clamping the two work-pieces together in parallel relationship in a joinery jig of the type claimed in any one of Claims 1 to 7 and, whilst the work-pieces are so clamped together, inserting a member through the respective said holes (28 and 40) in the second and third abutment members (22 and 34) and forming a fastening locator in the said surface of the first work-piece and in the said edge of the second work-piece.

10. A method of forming alignable fastening locators respectively in a surface of a first flat work-piece (W4) and an edge of a second flat work-piece (W3) enabling a T-joint to be made between the two work-pieces comprising the steps of clamping the said second work-piece (W3) alone in a joinery jig of the type claimed in any one of Claims 1 to 7, inserting a member through the hole (40) in the said third abutment member (34) and forming a fastening locator (62) in the said edge of the second work-piece, releasing the second work-piece from the jig, clamping the second work-piece in parallel relationship with the first work-piece, inserting the spigot (56) of a T-joint jig (50) of the type claimed in

4                    0095339

Claim 8 into the fastening locator (62) formed in the edge of the second work-piece (W3), inserting a member through the hole (52) of the T-joint jig and forming a fastening locator in the surface of the first work-piece(W4).

FIG. 1.

FIG. 2.

0095339

FIG.3.

European Patent
Office

**EUROPEAN SEARCH REPORT**

**0095339**

Application number

EP 83 30 2889

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| D,A | GB-A-2 071 537 (BARRUS LTD.)<br>* Pages 2, 3; figures 3-6 * | 1,8,9 | B 23 B 47/28<br>B 27 C 3/06 |
| A | US-A-3 914 871 (WOLFF)<br>* Column 3, line 1 - column 4, line 49; figures 1-4 * | 1 | |
| A | DE-A-2 750 869 (WOLFF)<br>* Figures 1-4, 9-11 * | 1,8 | |
| A | US-A-2 470 038 (LONG)<br>* Claim 1; figures 1, 2 * | 1 | |
| A | US-A-3 674 376 (SILKEN)<br>* Figures 1, 5 * | 1 | |
| A | DE-A-2 750 868 (WOLFF)<br>* Page 4, lines 7-17; figure 4 * | 8 | |

TECHNICAL FIELDS
SEARCHED (Int. Cl. 3)

B 23 B 47/28
B 23 B 49/02
B 27 C 3/00
B 27 F 5/12

The present search report has been drawn up for all claims

| Place of search | Date of completion of the search | Examiner |
|---|---|---|
| BERLIN | 18-08-1983 | MARTIN A E W |